# EUROPEAN PATENT SPECIFICATION

(11) **EP 2 738 919 B1**
(45) Date of publication and mention of the grant of the patent: **18.02.2015**
(21) Application number: 13194724.4
(22) Date of filing: 27.11.2013
(51) Int. Cl.: H02K 5/18

(54) **CASING FOR AN ELECTRIC MOTOR AND ELECTRIC MOTOR COMPRISING SAID CASING**
GEHÄUSE FÜR EINEN ELEKTROMOTOR UND ELEKTROMOTOR MIT DIESEM GEHÄUSE
BOÎTIER POUR MOTEUR ÉLECTRIQUE ET MOTEUR COMPRENANT DUDIT BÔITIER

(30) Priority: 28.11.2012 IT VI20120320
(43) Date of publication of application: 04.06.2014
(73) Proprietor: CALPEDA S.p.A., I-36050 Montorso Vicentino (VI) (IT)
(72) Inventor: Dai Pre', Michele, 37036 S. Martino Buon Albergo (VR) (IT); Signorin, Stefano, 36072 Chiampo (VI) (IT)
(74) Representative: Bonini, Ercole

(56) References cited:
- JP-A- 2004 289 928
- SU-A1- 736 274
- US-A1- 2011 082 021

## Description

The present invention concerns a casing for an electric motor.

The present invention also concerns an electric motor, of the type particularly suited to operate compressors or pumping devices, comprising said casing. As is known, an electric motor comprises a tubular casing suited to contain the stator.

The motor comprises also a fan that is revolvingly associated with one end of the casing and a fan cover that prevents access to the fan by the operator and furthermore conveys the air sucked by the fan towards the external surface of the casing.

The air flow produced in this way cools the casing and therefore makes it possible to remove the heat generated by the electric motor during its operation, limiting its operating temperature.

In order to increase the cooling efficiency, the external surface of the casing is provided with a plurality of cooling fins that considerably increase the surface of the casing and consequently favour the increase of the heat flow transferred to the air.

The surface area developed by the set of fins clearly increases as the number of fins and their height increase.

However, the increase in the value of the parameters mentioned above poses also a series of drawbacks.

In particular, the increase in the number of fins leads to a reduction of the air flow cross-section and, thus, to a higher resistance to the flow, which causes the removable heat flow to be reduced and increases noise.

On the other hand, due to construction reasons, the increased height of the fins is accompanied by their increased average thickness, leading to a reduction of the air flow cross-section and thus causing inconveniences that are similar to those mentioned above.

Furthermore, the increased height of the fins also leads to increased overall dimensions of the casing.

It should also be noted that the increased height of the fins gradually reduces their heat dissipation efficiency, due to the fact that the resistance to heat transmission increases along the entire height of the fins.

Therefore, it can be understood that it is not convenient to increase the height of the fins beyond a given limit, which represents the best compromise among the drawbacks mentioned above.

It is clear, however, that said compromise solution limits the heat dissipation efficiency of the set of fins and, therefore, does not allow the operating temperature of the motor to be reduced below a given minimum value.

It is the object of the present invention to provide a set of fins for the casing of an electric motor that makes it possible to cool the latter more effectively than is allowed by the sets of fins of the known type, assuming the same resistance to the flow of the cooling air. Prior art documents US 2011/082021, SU 736274 and JP 2004 289928 disclose casings for electrical machines having fins for cooling purposes.

The object illustrated above is achieved by a casing for an electric motor made according to claim 1, as well as by an electric motor comprising said casing, according to claim 9.

Further characteristics and details of the invention are described in the corresponding dependent claims.

Advantageously, all the other conditions being the same, the increased cooling efficiency of the set of fins of the invention produces a reduction in the operating temperature of the electric motor compared to that obtainable with the sets of fins of the known type.

Consequently, to advantage, it is possible to reduce thermal stress on the electric motor, increasing its duration and reducing the need for maintenance. Alternatively, the increased efficiency of the set of fins of the invention makes it possible to use the motor in more demanding environmental conditions than is allowed when using the sets of fins of the known type.

As a further alternative, given the same heat dissipation efficiency, the increased efficiency of the set of fins of the invention makes it possible to reduce the average height of the fins and thus the overall dimensions of the motor casing.

The said objects and advantages, together with others which are illustrated below, will be evident from the following descriptions of some preferred embodiments of the invention, which are provided by way of non-limiting examples with reference to the attached drawings, wherein:
- Figure 1 shows an axonometric view of an electric motor according to the invention;
- Figure 2 shows a cross section of the casing of the motor of Figure 1;
- Figure 3 shows a detail of Figure 2;
- Figure 4 shows a chart illustrating how the temperature of the inner surface of the casing of Figure 2 changes as the geometry of the set of fins changes;
- Figure 5 shows a chart of the derivative of the curve of Figure 4.

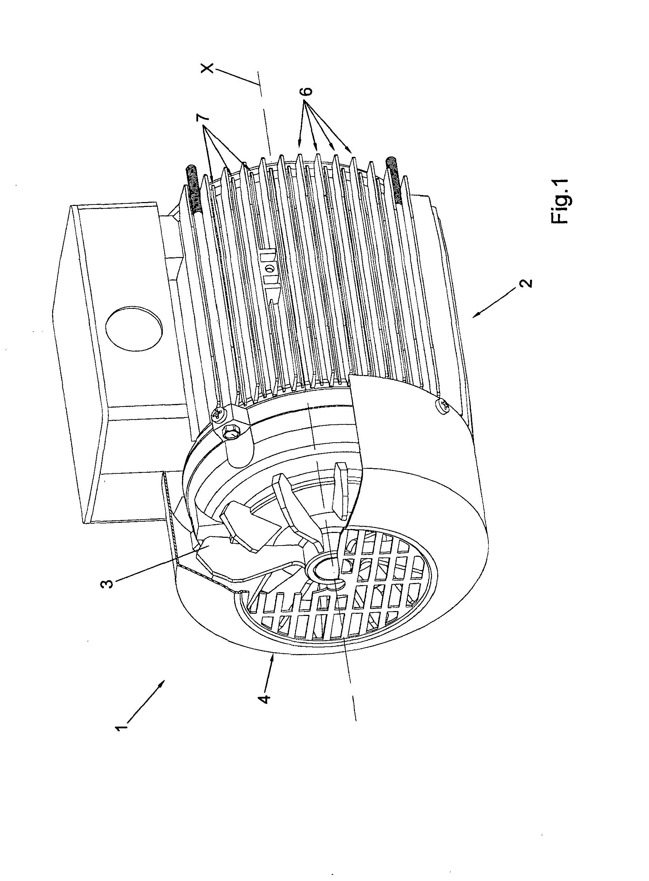

The electric motor of the invention, indicated as a whole by **1** in Figure 1, is provided with a casing **2** suited to contain the stator, not represented in the figure but known per se.

The casing **2** comprises a tubular body **5** that defines a longitudinal axis **X.**

The casing **2** also comprises a plurality of cooling fins **6** and **7,** mainly developed according to the direction corresponding to the longitudinal axis **X** and projecting from the external surface of the tubular body **5** by corresponding projection heights.

Preferably but not necessarily, the fins **6, 7** develop according to corresponding planes parallel to the longitudinal axis **X** of the casing **2.**

The fins **6, 7** are arranged so that they mutually face each other and in sequence one after the other according to a direction **Y** that is perpendicular to the longitudinal axis **X.**

The electric motor **1** comprises also a fan **3,** revolvingly associated with one end of the casing **2** and covered by a fan cover **4** that protects the fan **3** and makes it possible to convey the air that is sucked by the latter towards said fins **6, 7.**

The fan cover **4** is preferably configured in such a way that the above mentioned fins **6, 7** are left uncovered.

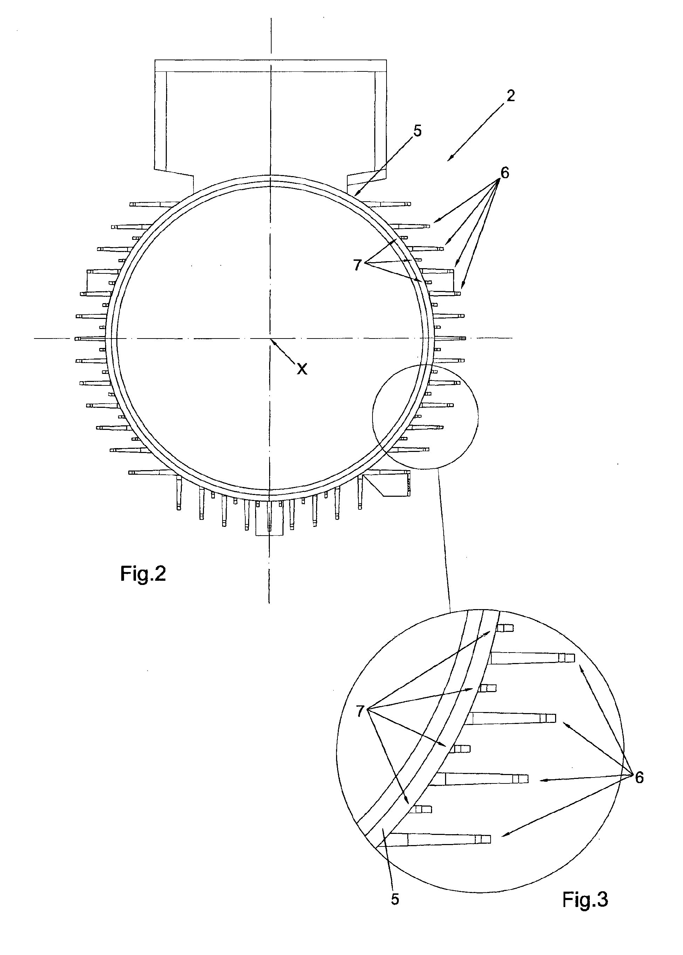

According to the invention and as shown in Figures 2 and 3, the fins **6** and **7** comprise a plurality of main fins **6** alternating, along said sequence, with a plurality of secondary fins **7.**

The secondary fins **7** can be distinguished from the main fins **6** due to the fact that each one of them is shorter than the two mutually adjacent main fins **6** between which the secondary fin **7** is interposed.

It can be understood that the secondary fins **7** serve the same function as the main fins **6,** that is, the function of increasing the overall heat exchange surface of the casing **2.**

However, the reduced height of the secondary fins **7** involves their reduced cross section and therefore limits the reduction they cause in the air flow cross-section passes between the main fins **6,** thus limiting also the reduction in the resistance to the air flow and the corresponding reduction to the exchanged heat flow.

As a whole, the applicant who is filing the present invention has observed that the reduced height of the secondary fins **7** interposed between the main fins **6** makes it possible to reduce the temperature of the internal surface of the tubular body **5,** which is indicative of an increase in the heat dissipation efficiency of the set of fins compared to the sets of fins of the known type having fins with uniform height and the same resistance to the flow of the cooling air, thus achieving the object of the invention.

It can thus be understood that, advantageously, said increased efficiency of the set of fins of the invention makes it possible to reduce the operating temperature of the electric motor **1** compared to the motors provided with sets of fins of the known type.

Alternatively, said increased heat dissipation efficiency allows the electric motor **1** to be used in hotter environments than allowed by the sets of fins of the known type.

As a further alternative, the increased heat dissipation efficiency makes it possible to reduce the height of the main fins **6** and, consequently, the overall dimensions of the casing **2.**

The applicant who is filing the present invention has found out that the temperature of the inner surface of the tubular body **5** decreases as the height of the secondary fins **7** increases.

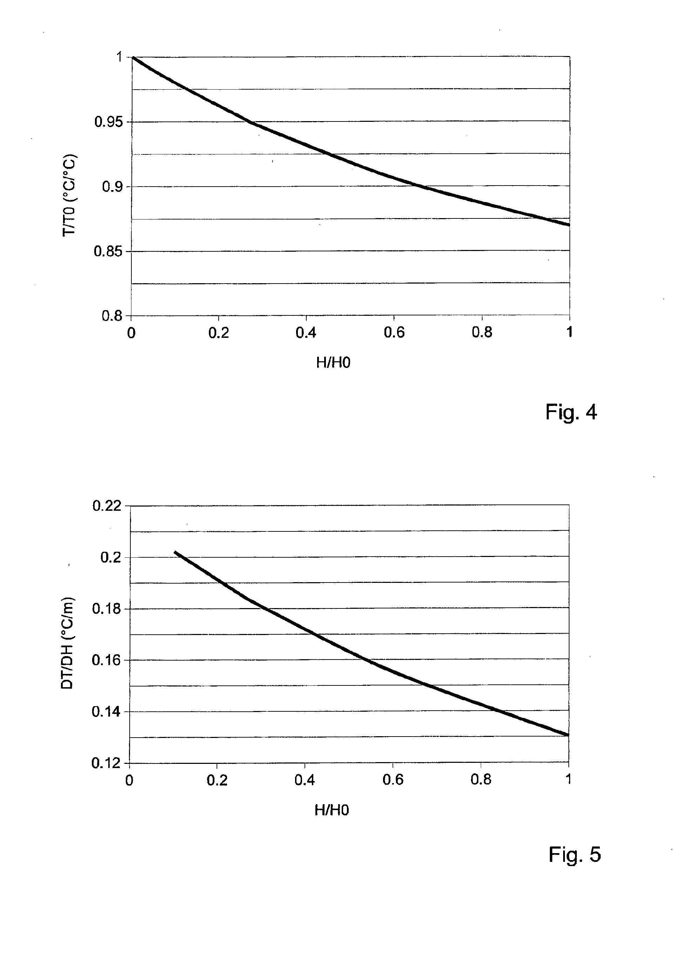

The above can be inferred from the chart shown in Figure 4, illustrating the theoretical development of the absolute temperature **T** of the inner surface of the tubular body **5,** expressed in relation to the temperature **To** measured in the absence of secondary fins **7,** as a function of the height **H** of the secondary fins **7,** expressed in relation to the height **H₀** of the main fins **6.**

The above mentioned chart has been drawn assuming, for the sake of simplicity, that the convection coefficient is constant on the entire surface of the fins and that the secondary fins **7** do not cause additional turbulence in the air flow.

The applicant has also observed that, given a pre-established variation in the height **H** of the secondary fins **7,** the variation in the temperature **T** of the tubular body **5** depends on the height **H** of the secondary fins **7.**

In particular, the smaller the height **H** of the secondary fins 7, the larger the variation in the temperature **T,** as shown in the chart of Figure 5, representing the derivative **DT/DH** of the curve of Figure 4 as an absolute value.

The secondary fins **7** are particularly advantageous when their height does not exceed half of the height of the main fins **6** adjacent to them between which the secondary fin **7** is interposed.

In fact, in addition to said height limit, the increase in the resistance to the flow, caused by the secondary fins **7,** becomes prevailing with respect to the increase in the heat exchange surface caused by them, thus leading to a limited improvement of the heat dissipation effect.

In other words, if the secondary fins **7** exceed a certain height, they become substantially equivalent to the same number of main fins **6.**

With the intention of reducing the interference of the secondary fins **7** on the air flow, each one of them has been preferably configured so that its cross section has an overall surface area that is smaller than 10% of the area of the cross section of the passage channel delimited by the two mutually adjacent main fins **6** between which the secondary fin **7** is interposed.

If the geometry and mutual distances of the main fins **6** have proportions substantially corresponding to those of the common sets of fins of the known type, the thickness of the secondary fins **7** substantially corresponds to that of the main fins **6** and there is only one secondary fin **7** interposed between any pair of main fins **6,** the condition just described above substantially corresponds to that relative to the height of the secondary fins **7.**

Concerning the arrangement of the fins **6** and **7,** at least one secondary fin **7** is preferably interposed between each pair of mutually adjacent main fins **6.** Advantageously, this makes it possible to maximize the heat exchange in each flow channel between the main fins **6,** thus obtaining the maximum overall effect.

Said configuration can be obtained, for example, starting from a set of fins of the known type, to which a secondary fin **7** is added between each pair of pre-existing fins, which correspond to the main fins **6** of the new set of fins. Preferably, only one secondary fin **7** is interposed between each pair of mutually adjacent main fins **6.**

Advantageously, this makes it possible to limit the interference of the secondary fins **7** in each flow channel.

According to a variant embodiment of the invention not represented herein, more than one secondary fins **7** are interposed between at least two mutually adjacent main fins **6.**

It is evident that in further embodiments of the invention the two variants described above can be combined, based on the preference of the manufacturer and the optimal heat dissipation needed in each specific case. Preferably, each secondary fin **7** and the mutually adjacent main fins **6** between which the secondary fin **7** is interposed are parallel to each other, with the advantage that the intermediate channels delimited by each pair of fins **6** and **7** have constant widths and thus favour a regular air flow.

It is also evident that in variant embodiments of the invention one or more fins **6, 7** can develop according to incident directions with respect to the fins **6, 7** adjacent to them.

Preferably, each secondary fin **7** has a length, measured along the direction corresponding to the longitudinal axis **X,** which is equal to that of the two main fins **6** adjacent to it.

It is also evident that in variant embodiments of the invention the secondary fin **7** can be shorter or longer than the two main fins **6** adjacent to it.

Preferably, the secondary fins **7** interposed between a given pair of main fins **6** are arranged symmetrically with respect to a reference plane that is equidistant from said two main fins **6,** to the advantage of the uniformity of the dissipative effects between the flow channels included between each pair of fins **6** and **7.** It is also evident that in variant embodiments of the invention the arrangement of the secondary fins **7** can be asymmetrical with respect to said reference plane.

For example, in the case where a set comprises only one secondary fin **7,** the latter can be arranged at different distances with respect to each one of the two main fins **6** adjacent to it.

According to further construction variants of the invention, the secondary fins **7** can develop according to non-rectilinear trajectories.

The above clearly shows that the set of fins described above achieves the object of the invention.

In fact, the sequence of main fins alternating with secondary fins that are shorter than the former makes it possible to increase the overall heat exchange surface without worsening considerably the resistance to the flow of air between the fins, consequently increasing the overall heat dissipation efficiency of the set of fins.

## Claims

1. Casing (2) for an electric motor (1), comprising:
- a tubular body (5) that defines a longitudinal axis (X);
- a plurality of cooling fins (6, 7) projecting from the external surface of said tubular body (5) by corresponding projection heights, each developed mainly according to the direction corresponding to said longitudinal axis (X), facing each other and arranged in sequence one after the other according to a direction (Y) that is perpendicular to said longitudinal axis (X),
**characterized in that** said fins (6, 7) comprise a plurality of main fins (6) alternating, along said sequence, with a plurality of secondary fins (7), each secondary fin (7) being shorter than the two mutually adjacent main fins (6) between which said secondary fin (7) is interposed.

2. Casing (2) according to claim 1, **characterized in that** at least one of said secondary fins (7) is interposed between each pair of said mutually adjacent main fins (6).

3. Casing (2) according to any of the preceding claims, **characterized in that** only one of said secondary fins (7) is interposed between each pair of said mutually adjacent main fins (6).

4. Casing (2) according to claim 1 or 2, **characterized in that** at least two of said secondary fins (7) are interposed between at least two of said mutually adjacent main fins (6).

5. Casing (2) according to any of the preceding claims, **characterized in that** the height of each one of said secondary fins (7) does not exceed half of the height of each one of the two mutually adjacent main fins (6) between which said secondary fin (7) is interposed.

6. Casing (2) according to any of the preceding claims, **characterized in that** the cross section of each one of said secondary fins (7) has a surface area that is smaller than 10% of the surface area of the cross section of the passage channel delimited laterally by the two mutually adjacent main fins (6) between which said secondary fin (7) is interposed.

7. Casing (2) according to any of the preceding claims, **characterized in that** the length of each one of said secondary fins (7) is smaller, in the direction corresponding to said longitudinal axis (X), than the length of the two mutually adjacent main fins (6) between which said secondary fin (7) is interposed.

8. Casing (2) according to any of the preceding claims, **characterized in that** each one of said fins (6, 7) develops along a corresponding plane that is parallel to said longitudinal axis (X).

9. Electric motor (1) comprising a casing (2), a fan (3) revolvingly associated with one end of said casing (2) and a fan cover (4) suited to convey the air moved by said fan (3) towards said fins (6, 7), **characterized in that** said casing (2) is made according to any of the preceding claims, each one of said fins (6, 7) of said casing (2) being arranged outside said fan cover (4).

## Patentansprüche

1. Gehäuse (2) für einen Elektromotor (1), Folgendes umfassend:
- einen röhrenförmigen Körper (5), der eine Längsachse (X) definiert;
- eine Vielzahl von Kühlrippen (6, 7), die um entsprechende, hervorstehende Höhen aus der Außenfläche des besagten, röhrenförmigen Körpers (5) herausragen, wobei jede dieser hervorstehenden Kühlrippen entsprechend der Richtung der besagten Längsachse (X) verläuft, zueinander gerichtet und in Sequenz ein nach der anderen angeordnet ist gemäß einer Richtung (Y), die lotrecht zur besagten Längsachse (X) steht,
**dadurch gekennzeichnet, dass** die besagten Rippen (6, 7) eine Vielzahl von Hauptrippen (6) umfassen, die sich entlang der Sequenz mit einer Vielzahl von Nebenrippen (7) abwechseln, wobei jede Nebenrippe (7) kürzer ist als die zwei benachbarten Hauptrippen (6), zwischen denen die besagte Zusatzrippe (7) eingefügt ist.

2. Gehäuse (2) gemäß Patentanspruch 1, **dadurch gekennzeichnet, dass** wenigstens eine der besagten Nebenrippen (7) zwischen jedem Paar der besagten, wechselseitig benachbarten Hauptrippen (6) eingefügt ist.

3. Gehäuse (2) gemäß eines jeden der vorstehenden Patentansprüche, **dadurch gekennzeichnet, dass** nur eine der besagten Nebenrippen (7) zwischen jedem Paar der besagten, wechselseitig benachbarten Hauptrippen (6) eingefügt ist.

4. Gehäuse (2) gemäß Patentanspruch 1 oder 2, **dadurch gekennzeichnet, dass** wenigstens zwei der besagten Nebenrippen (7) zwischen wenigstens zweien der besagten, wechselseitig benachbarten Hauptrippen (6) eingefügt sind.

5. Gehäuse (2) gemäß eines jeden der vorstehenden Patentansprüche, **dadurch gekennzeichnet, dass** die Höhe jeder der besagten Nebenrippen (7) die Hälfte der Höhe jeder der beiden wechselseitig benachbarten Hauptrippen (6), zwischen denen die besagte Nebenrippe (7) eingefügt ist, nicht überschreitet.

6. Gehäuse (2) gemäß eines jeden der vorstehenden Patentansprüche, **dadurch gekennzeichnet, dass** der Querschnitt jeder der besagten Nebenrippen (7) eine Oberfläche aufweist, die kleiner ist als 10% der Oberfläche des Querschnitts des Durchgangskanals, der seitlich durch die beiden wechselseitig benachbarten Hauptrippen (6), zwischen denen die besagte Nebenrippe (7) eingefügt ist, begrenzt ist.

7. Gehäuse (2) gemäß eines jeden der vorstehenden Patentansprüche, **dadurch gekennzeichnet, dass** die Länge jeder der besagten Nebenrippen (7) in der der besagten Längsachse (X) entsprechenden Richtung kleiner ist als die Länge der beiden wechselseitig benachbarten Hauptrippen (6), zwischen denen die besagte Nebenrippe (7) eingefügt ist.

8. Gehäuse (2) gemäß eines jeden der vorstehenden Patentansprüche, **dadurch gekennzeichnet, dass** jede der besagten Rippen (6, 7) sich entlang einer entsprechenden Ebene erstreckt, die parallel zu der besagten Längsachse (X) steht.

9. Elektromotor (1), ein Gehäuse (2), ein drehend mit einem Ende des besagten Gehäuses (2) verbundenes Lüfterrad (3) und einen Lüfterraddeckel (4), der geeignet ist, die durch das besagte Lüfterrad (3) bewegte Luft auf die besagten Rippen (6, 7) zu richten, umfassend, **dadurch gekennzeichnet, dass** das besagte Gehäuse (2) gemäß eines jeden der vorstehenden Patentansprüche ausgeführt ist, wobei jede der besagten Rippen (6, 7) des besagten Gehäuses (2) außerhalb des besagten Lüfterraddeckels (4) positioniert ist.

## Revendications

1. Boîtier (2) pour un moteur électrique (1) comprenant:
- un corps tubulaire (5) qui définit un axe longitudinal (X);
- une pluralité d'ailettes de refroidissement (6, 7) saillant de la surface extérieure dudit corps tubulaire (5) pour des hauteurs de saillie correspondantes, chacune développée principalement selon la direction correspondant audit axe longitudinal (X), tournée l'une en face de l'autre et disposées en séquence l'une après l'autre selon une direction (Y) perpendiculaire audit axe longitudinal (X),
**caractérisé en ce que** lesdites ailettes (6, 7) comprennent une pluralité d'ailettes principales (6) alternées, le long de ladite séquence, à une pluralité d'ailettes secondaires (7), chaque ailette secondaire (7) présentant une hauteur inférieure par rapport aux deux ailettes principales (6) réciproquement adjacentes entre lesquelles ladite ailette secondaire (7) est interposée.

2. Boîtier (2) selon la revendication 1, **caractérisé en ce que**, entre chaque couple desdites ailettes principales (6) réciproquement adjacentes, au moins une desdites ailettes secondaires (7) est interposée.

3. Boîtier (2) selon l'une quelconque des revendications précédentes, **caractérisé en ce que**, entre chaque couple desdites ailettes principales (6) réciproquement adjacentes, seulement une desdites ailettes secondaires (7) est interposée.

4. Boîtier (2) selon la revendication 1 ou 2, **caractérisé en ce que**, entre au moins deux desdites ailettes principales (6) réciproquement adjacentes, au moins deux desdites ailettes secondaires (7) sont interposées.

5. Boîtier (2) selon l'une quelconque des revendications précédentes, **caractérisé en ce que** chacune desdites ailettes secondaires (7) présente une hauteur non supérieure à la moitié de la hauteur de chacune desdites deux ailettes principales (6) réciproquement adjacentes entre lesquelles ladite ailette secondaire (7) est interposée.

6. Boîtier (2) selon l'une quelconque des revendications précédentes, **caractérisé en ce que** chacune desdites ailettes secondaires (7) présente une section transversale ayant une surface inférieure à 10% de la surface de la section transversale du canal de passage délimité latéralement par les deux ailettes principales (6) réciproquement adjacentes entre lesquelles ladite ailette secondaire (7) est interposée.

7. Boîtier (2) selon l'une quelconque des revendications précédentes, **caractérisé en ce que** chacune desdites ailettes secondaires (7) présente une longueur, dans la direction correspondant audit axe longitudinal (X), inférieure à la longueur des deux ailettes principales (6) réciproquement adjacentes entre lesquelles ladite ailette secondaire (7) est interposée.

8. Boîtier (2) selon l'une quelconque des revendications précédentes, **caractérisé en ce que** chacune desdites ailettes (6, 7) se développe le long d'un un plan correspondant qui est parallèle audit axe longitudinal (X).

9. Moteur électrique (1) comprenant un boîtier (2), un ventilateur (3) associé de manière tournante à une extrémité dudit boîtier (2) et un capot de ventilateur (4) apte à transporter l'air déplacé par ledit ventilateur (3) vers lesdites ailettes (6, 7), **caractérisé en ce que** ledit boîtier (2) est réalisé selon l'une quelconque des revendications précédentes, chacune desdites ailettes (6, 7) dudit boîtier (2) étant disposée à l'extérieur dudit capot de ventilateur (4).
